# EUROPEAN PATENT SPECIFICATION

(11) **EP 1 468 525 B1**
(45) Date of publication and mention of the grant of the patent: **04.04.2012**
(21) Application number: 02793672.3
(22) Date of filing: 18.12.2002
(51) Int. Cl.: H04L 12/28, H04N 7/173

(54) **LOCAL INSTALLATION FOR CONNECTING A PLURALITY OF COMPUTER TERMINALS TO A BROADBAND CABLE**
LOKALANLAGE ZUM VERBINDEN MEHRERER COMPUTERTERMINALS MIT EINEM BREITBANDKABEL
INSTALLATION POUR LA CONNEXION D'UNE PLURALITE DE TERMINAUX D'ORDINATEUR A UN CABLE DE BANDE LARGE

(30) Priority: 27.12.2001 SE 0104420
(43) Date of publication of application: 20.10.2004
(73) Proprietor: Actioncable Inc., Freemont CA 94538 (US)
(72) Inventor: SÖDERQVIST, Erik, Richard, S-146 52 Tullinge (SE); SUNDBERG, Magnus, Michael, S-191 49 Sollentuna (SE)
(74) Representative: Zetterström, Alf
(86) International application number: PCT/SE2002/002367
(87) International publication number: WO 2003/056762

(56) References cited:
- EP-A2- 0 742 657
- WO-A1-96/08925
- US-A- 5 124 980
- US-A- 5 768 280
- US-A- 5 822 678
- US-A- 5 963 844

## Description

The present invention relates to a local installation for connecting a plurality of computer terminals, intended to be placed at different places within a restricted local area, to an external broadband cable, intended for bidirectional transmission of data in the form of base band signals.

In order to facilitate a transmission of data at a high speed between different computer users and a communication central, common to a large number of such users, it has become more and more frequent in recent years, from a communication central and to different local areas, to run broadband cables on which data can be transmitted in the form of optical or electric base band signals. However, in many cases, the connection of different computer users, residing within a certain local area, to the external broadband cable run to said area has been strongly delayed due to the fact that, hitherto, said connection has usually been effected by running a separate connection line from said cable to each individual computer user, i.e. by a method that in practice implies a troublesome and time-consuming and hence costly installation.

The invention has for its purpose to provide an improved installation of the kind initially specified which makes it possible to effect the desired connection between each separate computer terminal within the local area in question and the external broadband cable in a substantially simplified, more rapid and less costly manner.

The installation proposed according to the invention is based on a specific basic principle consisting in that the computer terminals are connected to the broadband cable via an existing local coaxial cable network, forming a restricted local portion of a cable TV system and serving to distribute TV and/or radio signals to different places within said area from an external source for such signals, connected to said network by means of another external cable.

An installation based on the same basic principle is previously known through WO 00/05895. However, this known installation suffers from substantial drawbacks following from the fact that the data signals are transmitted in the local network in the form of base band signals. For instance, it could be mentioned that in many cable TV systems there does not exist any available sufficiently wide free frequency band at the bottom of the total frequency spectrum that could be used to permit a transmission of data signals in the form of base band signals at a substantial rate through the local network.

According to the present invention, there is provided a new and improved local installation of the kind above specified avoiding the drawbacks of the abovementioned known installation.

The installation according to the invention is primarily characterized in that the computer terminals and the broadband cable are connected to said network through the intermediary of modulator and demodulator means which are arranged to permit data to be transmitted on said network in both directions between the computer terminals and the broadband cable in the form of modulated carrier signals having carrier frequencies within frequency bands lying above the frequency bands used for the distribution of TV and/or radio signals, wherein the installation includes means for separating TV signals transmitted on the local network from data signals transmitted thereon, and wherein the computes terminals are connected to the local coaxial cable network via existing TV signal outlets of said network.

The invention fully eliminates the previous need for installing special connection lines between the external broadband cable and the computer terminals. Additionally, the invention also offers the advantages of making a very broad frequency band disposable for the data transmission between the broadband cable and the computer terminals. Moreover, the invention also simplifies the installation of the required supplementary equipment at each separate computer user location. If the coaxial cable network for instance is installed in an apartment block, the connection of the computer terminals to the coaxial cable network can be effected by the apartment owners themselves and thus, it is not required to engage an installer for said purpose.

US-A-5 768 280 relates to a CATV system where TV signals as well as various kinds of communication signals are transmitted between various subscribers and a common head end on a single cable serving to transmit both kinds of signals. Said document does not disclose any possible use of an existing cable TV system for facilitating a simple and easy connection of different computer terminals to a separate broadband cable intended for the bidirectional transmission of data between said terminals and a separate data communication central.

US-A-5 822 678 discloses a cable TV network wherein TV signals, data signals and telephonic signals are transmitted on a coaxial cable infrastructure. Different frequency bands are utilized for the transmission of the different kinds of signals. Even this document fails to disclose any possible use of an existing cable TV system for facilitating a simple and easy connection of different computer terminals to a separate broadband cable intended for the bidirectional transmission of data between said terminals and a separate data communication central.

The computer terminals may suitably be connected to the existing TV signal outlets by means of respective connection units, each of which comprises means for diverting the TV signals to a supplementary TV signal outlet and preferably also containing the modulator and demodulator means of the computer terminal in question.

In order to prevent unauthorized people from picking up the data signals transmitted to or from a certain computer terminal, the modulator and demodulator means used for connecting the broadband cable and the computer terminals to the coaxial cable network may, when so required, be arranged to permit the data transmission on said network to be effected while utilizing mutually different carrier frequencies for different computer terminals.

In order to facilitate a simultaneous data transmission to and from a computer terminal, i.e. full duplex, it is possible, for the connection of the broadband cable and the computer terminals to the coaxial cable network, to use modulator and demodulator means which are arranged to utilize mutually different carrier frequencies for the data transmission in mutually opposite directions on said network.

WO 98/57456 relates to a very specific arrangement wherein there exist a set of individual cables which extend between different remote locations and a common distribution center and which can be used to transmit various kinds of signals to and from, on the one hand, the different remote locations and, on the other hand, the common distribution center. Contrary to the local network according to the present invention, the individual cables of the known arrangement do not constitute a local portion of a cable TV system. For this reason, if the arrangement is connected to a cable TV system, it does not permit a transmision of more than one single TV program at a time from the distribution center and to a remote location. Therefor, it is not possible at a remote location easily to shift from one TV program to another one of the various programs distributed on the cable TV system.

Below the invention is further described with reference to the accompanying drawings, in which:-
Figure 1 shows a block diagram of a local installation according to the invention serving for connecting a plurality of computer terminals to an external broadband cable,
Figure 2 shows a block diagram of a combined modulator and demodulator unit according to a first kind of such units contained in said installation, and
Figure 3 shows a block diagram of a combined modulator and demodulator unit according to a second kind of such units contained in said installation.

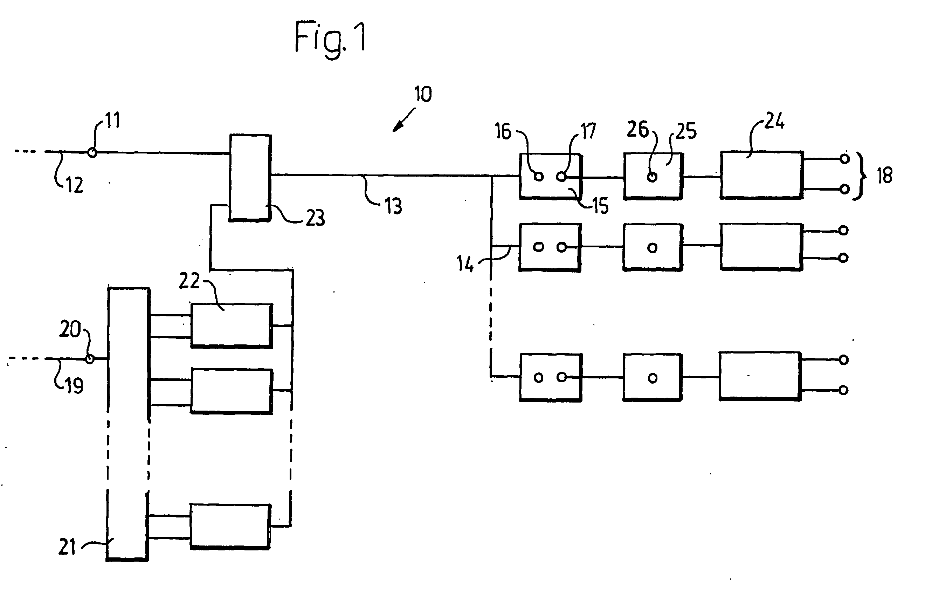

In Figure 1, reference numeral 10 generally designates a local coaxial cable TV network of tree and branch type comprising an input 11, intended to be connected to an external coaxial cable 12, on which, from an external source not shown, network 10 may be supplied with TV and radio signals consisting of modulated carrier signals having carrier frequencies lying within a predetermined frequency band, e.g. 47 to 860 MHz.

From input 11, said signals are distributed via a main line 13 of network 10 and a plurality of branch lines 14, connected to said main line, to a plurality of outlet boxes 15, connected each to one of said branch lines and provided at different subscribers and each of which comprises a radio signal outlet 16 and a TV signal outlet 17.

Apart from being used for the distribution of TV and radio signals, network 10 may also be used for bidirectional transmission of data in the form of modulated carrier signals between a plurality of computer terminals 18, provided at different subscribers, and an external broadband cable 19 on which said data can be transmitted in the form of base band signals to or from a communication central, not shown, which may be located at a large distance from the local area covered by network 10.

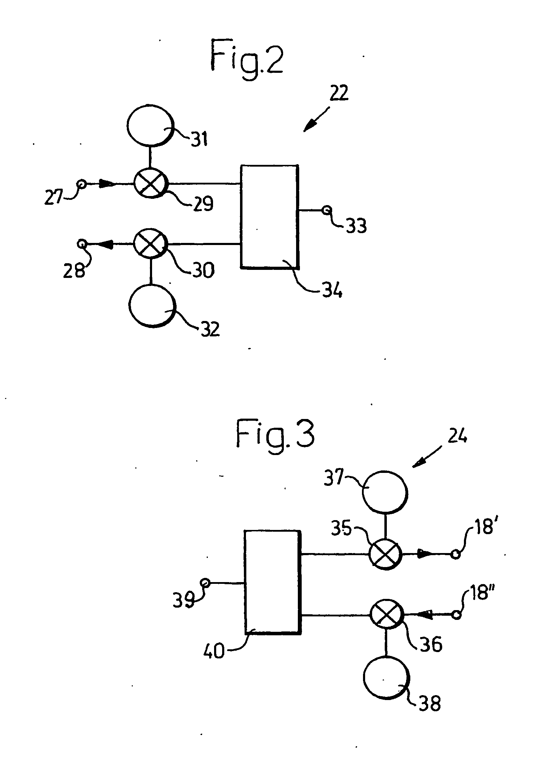

For this purpose, the installation comprises a coupling unit 21, connected to cable 19 via a combined input and output 20, and a plurality of combined modulator and demodulator units 22, connected to said coupling unit and forming a separate unit of said kind for each individual computer terminal 18. Units 22, the more detailed structure of which appears from Figure 2, are all connected to network 10 via a diplex filter 23, connected in main line 13 and having for its purpose to prevent data signals transmitted on network 10 from being fed out on cable 12 and via said cable to other local networks and to prevent any disturbances appearing on cable 12 and having frequencies lying outside the frequency band utilized for the transmission of TV and radio signals from being transmitted to network 10.

Furthermore, the installation also comprises a corresponding plurality of combined modulator and demodulator units 24 which are connected each to the TV signal outlet 17 of one outlet box 15 via a connection unit 25 which is provided with a supplementary TV signal outlet 26 to which it is arranged to divert incoming TV signals. Unit 25, which in practice may be united with unit 24 and also computer terminal 18, may preferably comprise a diplex filter. The more detailed structure of units 24 appears from Figure 3.

Units 22 have for their purpose to convert data, incoming in the form of base band signals from cable 19 via unit 21, to corresponding modulated carrier signals and to deliver the latter signals to line 13. In a corresponding manner, units 24 have for their purpose to convert data, incoming in the form of base band signals via computer terminals 18, to corresponding modulated carrier signals and to deliver the latter signals to network 10. Moreover, units 22 also serve to convert modulated carrier signals, transmitted to them from units 24 via network 10, to corresponding base band signals and to deliver the latter signals to unit 21 for subsequently outputting them on cable 19, while units 24 serve to convert modulated carrier signals, transmitted to them from units 22, to corresponding base band signals and to deliver the latter signals to the respective computer terminals 18.

As may be seen from Figure 2, each unit 22 comprises an input 27, connected to unit 21 (Figure 1), and an output 28, also connected to unit 21. Additionally, it also comprises two sine wave generators 31 and 32, connected each to one mixer 29 and 30, respectively, and a diplex filter 34, connected to a combined input and output 33 which in its turn is connected to diplex filter 23 (Figure 1).

In a corresponding manner, each unit 24 comprises an output 18' and an input 18" which together form a computer terminal 18 (Figure 1) to which a computer may be connected. Furthermore, each unit 24 also comprises two sine wave generators 37 and 38 which are connected each to one mixer 35 and 36, respectively, and a diplex filter 40, connected to a combined input and output 39 which in its turn is connected to connection unit 25 (Figure 1).

In order to make sure that each separate unit 22 will cooperate in the above described manner only with the particular unit 24, intended to cooperate therewith, sine wave generators 31 and 37 of said two cooperating units are arranged to generate a sine wave having a predetermined unique frequency f', while sine wave generators 32 and 38 of said two units are arranged to generate a sine wave having another predetermined unique frequency f".

Hereby, mixer 29 will transform the data received via input 27 and consisting of base band signals to corresponding modulated carrier signals having the carrier frequency f'. When reaching mixer 35, the latter signals will then be demodulated by said mixer and become reconverted into base band signals that may be fed out via output 18'.

In corresponding manner, by means of mixer 36, base band signals incoming via input 18" will be converted into corresponding modulated carrier signals having the carrier frequency f" which then by means of mixer 30 are reconverted into base band signals that can be fed out via output 28.

For all pairs of cooperating units 22 and 24, said carrier frequencies may suitably be selected within a frequency band lying above the frequency bands utilized for the distribution of radio and TV signals. Thus, one may for instance use carrier frequencies within the interval from about 900 MHz to about 2000 MHz for the transmission of data.

The invention is not restricted to the embodiment above described and shown in the drawings. Instead, many other embodiments are feasible within the scope of the invention as defined in the following claims. By way of example, it could be mentioned that the invention may be applied also in connection with other types of local coaxial cable networks than tree and branch networks. For instance, the local network may consist of a star network. Finally, it should be mentioned that the expression "computer terminal" herein used is intended to include any kind of terminal or other connection means to which a computer may be directly or indirectly connected.

## Claims

1. Local installation for connecting a plurality of computer terminals (18), intended to be placed at different places within a restricted local area, to an external broadband cable (19) intended for bidirectional transmission of data in the form of base band signals, wherein the computer terminals (18) are connected to the broadband cable (19) via an existing local coaxial cable network (10), forming a restricted local portion of a cable TV system and serving to distribute TV and/or radio signals to different places within said area from an external source for such signals, connected to said network (10) by means of another external cable (12), **characterized in that** the computer terminals (18) and the broadband cable (19) are connected to said network (10) through the intermediary of modulator and demodulator means (22, 24) which are arranged to permit data to be transmitted on said network (10) in both directions between the computer terminals (18) and the broadband cable (19) in the form of modulated carrier signals having carrier frequencies within frequency bands lying above the carrier frequenty bands used for the distribution of TV and/or radio signals, wherein the installation includes means (25) for separating TV signals transmitted on the local network from data signals transmitted thereon, and wherein the computer terminals (18) are connected to the local coaxial cable network (10) via existing TV signal outlets (17) of said network (10).

2. Installation according to claim 1, **characterized in that** the computer terminals (18) are connected to the existing TV signal outlets (17) by means of respective connection units (25), each of which comprises means for diverting the TV signals to a supplementary TV signal outlet (26).

3. Installation according to claim 2, **characterized in that** the connection units (25) also contain the modulator and demodulator means (24) of the terminal (18) in question.

4. Installation according to any of the preceding claims, **characterized in that** the broadband cable (19) and the computer terminals (18) are connected to the local coaxial cable network (10) through the intermediary of modulator and demodulator means (22, 24) which are arranged to permit the data transmission on said network (10) to be effected while utilizing mutually different carrier frequencies for differant computer terminals (18).

5. Installation according to any of the preceding claims, **characterized in that** the broadband cable (19) and the computer terminals (18) are connected to the local coaxial cable network (10) through the intermediary of modulator and demodulator means (22, 24) which are arranged to permit mutually different carrier frequencies to be utilized for the data transmission in mutually opposite directions on said network (10).

## Patentansprüche

1. Lokale Anlage zum Verbinden einer Mehrzahl von Computerterminals (18), die an verschiedenen Stellen innerhalb eines begrenzten lokalen Bereichs plaziert sein sollen, mit einem externen Breitbandkabel (19) das zur bidirektionalen Übertragung von Daten in Form von Basisbandsignalen bestimmt ist, wobei die Computerterminals (18) mit dem Breitbandkabel (19) via ein vorhandenes lokales Koaxialkabelnetzwerk (10) verbunden sind, das einen begrenzten lokalen Abschnitt eines Kabelfernsehsystems bildet und dazu dient, Fernseh- und/oder Radiosignale an verschiedene Stellen innerhalb des Bereichs zu verteilen von einer externen Quelle für derartige Signale aus, die mit dem Netzwerk (10) mittels eines anderen externen Kabels (12) verbunden ist, dadurch gekennnzeichnet, dass die Computerterminals (18) und das Breitbandkabel (19) mit dem Netzwerk (10) verbunden sind durch die Zwischenschaltung von Mcdulater- und Demodulatormitteln (22, 24), die eingerichtet sind, um zu ermöglichen, dass Daten auf dem Netzwerk (10) in beide Richtungen zwischen den Computertermnals (18) und dem Breitbandkabel (19) übertragen werden in Form modulierter Trägersignale mit Trägerfrequenzen innerhalb Frequenzbändern, die über den Trägerfrequenzbändern liegen, die für die Verteilung von Fernseh- und/oder Radiosignalen verwendet werden, wobei die Anlage Mittel (25) beinhaltet, um Fernsehsignale, die auf dem lokalen Netzwerk übertragen werden, von darauf übertragenen Datensignalen zu trennen, und wobei die Computerterminals (18) mit dem lokalen Koaxialkabelnetzwerk (10) via vorhandene Fernsehsignaloutlets bzw. -anschlusspunkte (17) des Netzwerks (10) verbunden sind.

2. Anlage nach Anspruch 1, **dadurch gekennzeichnet, dass** die Computerterminals (18) mit den vorhandenen Fernsehsignaloutlets bzw. -anschlusspunkten (17) mittels jeweiliger Verbindungseinheten (25) verbunden sind, von denen jede Mittel zum Umleiten der Fernsehsignale zu einem ergänzenden Fernsehsignaloutlet bzw. -anschlusspunkt (26) umfasst.

3. Anlage nach Anspruch 2, **dadurch gekennzeichnet, dass** die Verbindungseinheiten (25) weiterhin die Modulator- und Demodulatormittel (24) des betreffenden Terminals (18) enthalten.

4. Anlage nach einem der vorstehenden Ansprüche, **dadurch gekennzeichnet, dass** das Breitbandkabel (19) und die Computerterminals (18) mit dem lokalen Koaxialkabelnetzwerk (10) durch die Zwischenschaltung von Modulator-und Demodulatormitteln (22, 24) verbunden sind, die eingerichtet sind, um zu ermöglichen, dass die Datenübertragung auf dem Netzwerk (10) erfolgt, während voneinander differierende Trägerfrequenzen für verschiedene Computerterminals (18) verwendet werden.

5. Anlage nach einem der vorstehenden Ansprüche, **dadurch gekennzeichnet, dass** das Breitbandkabel (19) und die Computerterminals (18) mit dem lokalen Koaxialkabelnetzwerk (10) durch die Zwischenschaltung von Modulator-und Demodulatormitteln (22, 24) verbunden sind, die eingerichtet sind, um zu ermöglichen, dass voneinander differierende Trägerfrequenzen für die Datenübertragung in einander entgegengesetzte Richtungen auf dem Netzwerk (10) verwendet werden.

## Revendications

1. Installation locale servant à connecter une pluralité de terminaux d'ordinateur (18), destinés à être placés à différents endroits à l'intérieur d'une zone locale d'accès limité, à un câble extérieur à large bande (19), destiné à une transmission de données bidirectionelle sous la forme de signaux en bande de base, dans laquelle les terminaux d'ordinateur (18) sont connectés au câble à large bande (19) par l'intermédiaire d'un réseau câblé coaxial local existant (10), en formant une partie locale d'accès limité d'un système de TV par câble et servant à distribuer des signaux TV et / ou radio à différents endroits à l'intérieur de ladite zone depuis une source extérieure de tels signaux, connectés audit réseau (10) au monyen d'un autre câble extérieur (12), **caractérisée en ce que** les terminaux d'ordinateur (18) et le câble à large bande (19) sont connectés audit réseau (10) par l'intermédiaire de moyens de modulateur et de démodulateur (22, 24) qui sont agencés de manière à permettre la transmission des données sur ledit réseau (10) dans le deux directions entre les terminaux d'ordinateur (18) et le câble à large bande (19) sous la forme de signaux de porteuses modulés qui présentent de fréquences de porteuses à l'intérieur de bandes de fréquences se trouvant au-dessus des bandes de fréquences de porteuses utilisées pour la distribution des signaux TV et / ou radio, et dans laquelle l'installation comprend des moyens (25) servant à séparer les signaux TV transmis sur le réseau local des signaux de données qui sont transmis, et dans laquelle les terminaux d'ordinateur (18) sont connectés au réseau de câblage coaxial local (10) par l'intermédiaire de prises de signal TV (17) existantes dudit réseau (10).

2. Installation selon la revendication 1, **caractérisée en ce que** les terminaux d'ordinateur (18) sont connectés aux prises de signal TV (17) existantes au moyen d'unités de connexion (25) respectives, chacune d'elles comprenant des moyens permettant de dérouter les signaux de TV vers une prise de signal TV (26) supplémentaire.

3. Installation selon la revendication 2, **caractérisée en ce que** les unités de connexion (25) contiennent également les moyens de modulateur et de démodulateur (24) du terminal (18) en question.

4. Installation selon l'une quelconque des revendications précédentes, **caractérisée en ce que** le câble à large bande (19) et les terminaux d'ordinateur (18) sont connectés au réseau de câblage coaxial local (10) par l'intérmediaire des moyens de modulateur et de démodulateur (22, 24) qui sont agencés de manière à permettre d'effectuer une transmission de données sur ledit réseau (10) tout en utilisant des fréquences porteuses différentes entre elles pour différents terminaux d'ordinateur (18).

5. Installation selon l'une quelconque des revendications précédentes, **caractérisée en ce que** le câble à large bande (19) et les terminaux d'ordinateur (18) sont connectés au réseau câblé coaxial local (10) par l'intermediaire des moyens de modulateur et de démodulateur (22, 24) qui sont agencés de manière à permittre l'utilisation de différentes fréquences porteuses pour la transmission de données dans des directions mutuellement opposées sur ledit réseau (10).
